# FASCICULE DE BREVET EUROPEEN

(11) **EP 2 401 933 B1**
(45) Date de publication et mention de la délivrance du brevet: **31.12.2014**
(21) Numéro de dépôt: 11354035.5
(22) Date de dépôt: 29.06.2011
(51) Int. Cl.: A44B 11/28

(54) **Boucle de fixation perfectionnée à double verrouillage**
Perfektionierte Befestigungsschlinge mit doppelter Verriegelung
Advanced double-locking attachment device

(30) Priorité: 02.07.2010 FR 1002797
(43) Date de publication de la demande: 04.01.2012
(73) Titulaire: Zedel, 38920 Crolles (FR)
(72) Inventeur: Hede, Jean-Marc, 38420 Domène (FR)
(74) Mandataire: Hecké, Gérard

(56) Documents cités:
- WO-A1-03/059107
- CN-Y- 201 263 446
- DE-A1-102006 004 852
- DE-C- 249 673

## Description

### Domaine technique de l'invention

L'invention est relative à une boucle de fixation, comprenant une embase munie d'un crochet pour l'accrochage d'un anneau de retenue, et des moyens de commande aptes à occuper une position de blocage, et une position de déblocage, respectivement pour retenir et libérer l'anneau de retenue dans le crochet, les moyens de commande comportant deux éléments de verrouillage indépendants l'un de l'autre, et ayant chacun une butée d'arrêt et un bouton de manoeuvre.

La boucle de fixation est connectée à une sangle d'une ceinture ou d'un baudrier d'escalade, de spéléologie ou pour les travaux en hauteur. Pour des questions de sécurité, toute ouverture intempestive de la boucle doit être impossible.

### État de la technique

Le document EP 1465507 décrit une boucle de fixation à auto-verrouillage comprenant un seul bouton de manoeuvre mobile entre une position de fermeture et une position d'ouverture, et un verrou basculant pour verrouiller le bouton de manoeuvre en position de fermeture. Le verrou est agencé dans la partie centrale de la boucle, et le bouton est pourvu d'une patte formant butée, laquelle s'escamote lors de l'insertion de l'anneau sur le crochet. L'ouverture de la boucle sous tension est impossible.

La commande d'ouverture de la boucle doit être opérée en l'absence de charge, et nécessite deux actions distinctes consécutives :
- une première action de déverrouillage du verrou et d'appui sur le bouton pour ouvrir la boucle ;
- une deuxième action pour décrocher l'anneau du crochet, en le poussant vers l'arrière, tout en enlevant le doigt qui appuyait sur le bouton, et qui se trouve sur la trajectoire de l'anneau.

Les mouvements d'actionnement nécessaires pour l'ouverture nécessitent un certain temps, car il faut d'abord déverrouiller le verrou, appuyer sur le bouton, et ensuite dégager l'anneau tout en enlevant le doigt.

Le document DE 249673 se rapporte à une boucle de fixation avec deux éléments de verrouillage disposés en alignement selon la direction transversale, et dont les boutons font saillie de part et d'autre de la boucle. Une telle disposition des boutons ne permet pas de garantir un blocage fiable de la boucle.

### Objet de l'invention

L'objet de l'invention consiste à réaliser une boucle de fixation d'un anneau, de structure fiable, qui soit facile à libérer à l'aide des deux mains lorsque la boucle n'est pas sous charge, et évitant toute libération involontaire en usage normal sans les mains.

La boucle de fixation selon l'invention est caractérisée en ce que les éléments de verrouillage sont formés par deux leviers montés à pivotement à l'intérieur du capot, la butée d'arrêt étant agencée à l'une des extrémités de chaque levier, et le bouton de manoeuvre à l'autre extrémité, le décrochage de l'anneau étant autorisé en l'absence de charge, et lors de l'actionnement simultané des boutons des deux leviers vers la position de déblocage.

L'anneau de retenue reste emprisonné dans le crochet, et toute ouverture intempestive de la boucle de fixation est impossible en absence d'action sur les boutons latéraux. On obtient ainsi un double verrouillage de l'anneau de retenue dans la boucle de fixation. Un actionnement volontaire ou involontaire d'un seul bouton n'est pas suffisant pour sortir l'anneau du crochet

Selon un mode de réalisation préférentiel, les deux éléments de verrouillage sont disposés symétriquement par rapport au plan médian longitudinal. Les éléments de verrouillage sont logés à l'intérieur d'un capot fixé à l'embase, et comprenant deux lumières latérales pour l'accès aux boutons de manoeuvre. Le levier de chaque élément de verrouillage est monté à pivotement autour d'un axe incliné permettant un pivotement en biais, les deux leviers étant disposés symétriquement par rapport au plan médian longitudinal.

Selon une caractéristique de l'invention, un ressort de rappel est associé à chaque levier pivotant pour le solliciter vers la position relevée de blocage.

Le levier de chaque élément de verrouillage peut être doté d'une rampe sur laquelle prend appui l'anneau de retenue lors de son introduction dans le crochet.

### Description sommaire des dessins

D'autres avantages et caractéristiques ressortiront plus clairement de la description qui va suivre d'un mode de réalisation de l'invention donné à titre d'exemple non limitatif et représenté aux dessins annexés, dans lesquels :

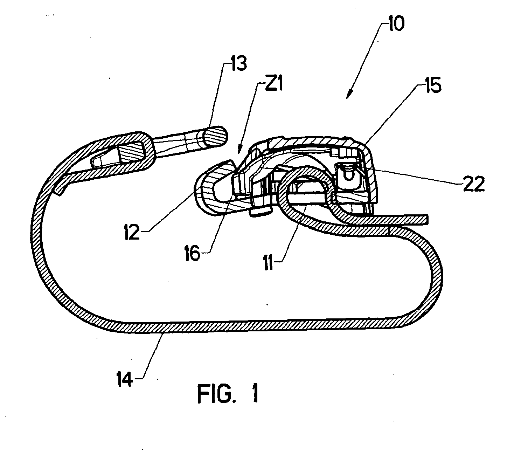

- la figure 1 est une vue schématique de la boucle avec l'anneau d'accrochage en état décroché ;

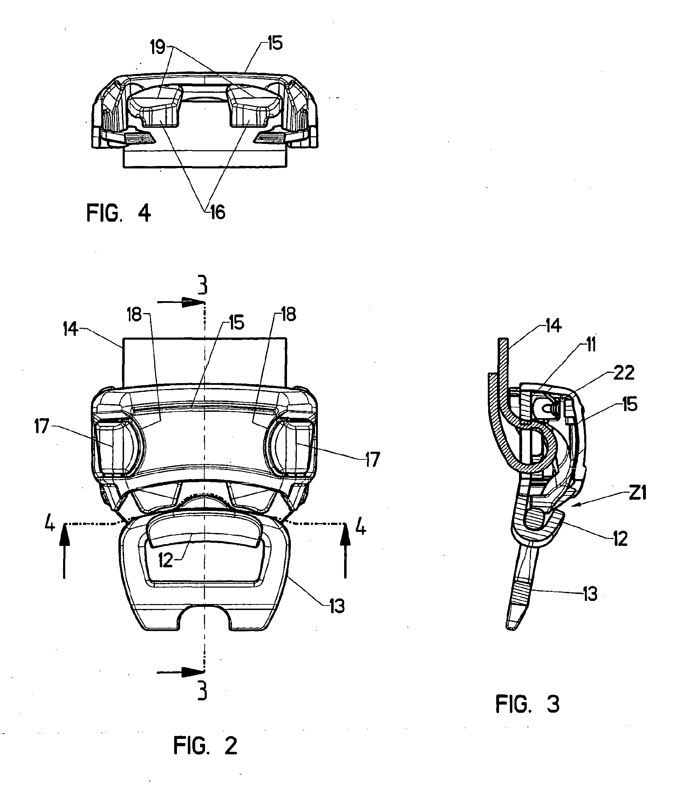

- la figure 2 montre une vue en plan de la boucle avec les éléments de verrouillage en position relevée de blocage, emprisonnant l'anneau dans le crochet ;
- les figures 3 et 4 sont des vues en coupe selon les lignes 3-3 et 4-4 de la figure 2 ;

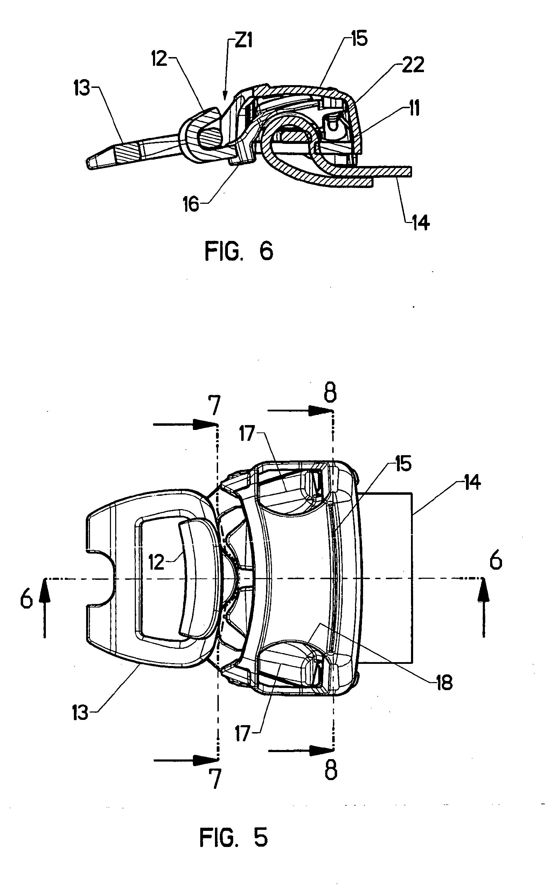

- la figure 5 représente une vue identique de la figure 2, avec les éléments de verrouillage en position abaissée de déblocage, permettant de décrocher l'anneau ;

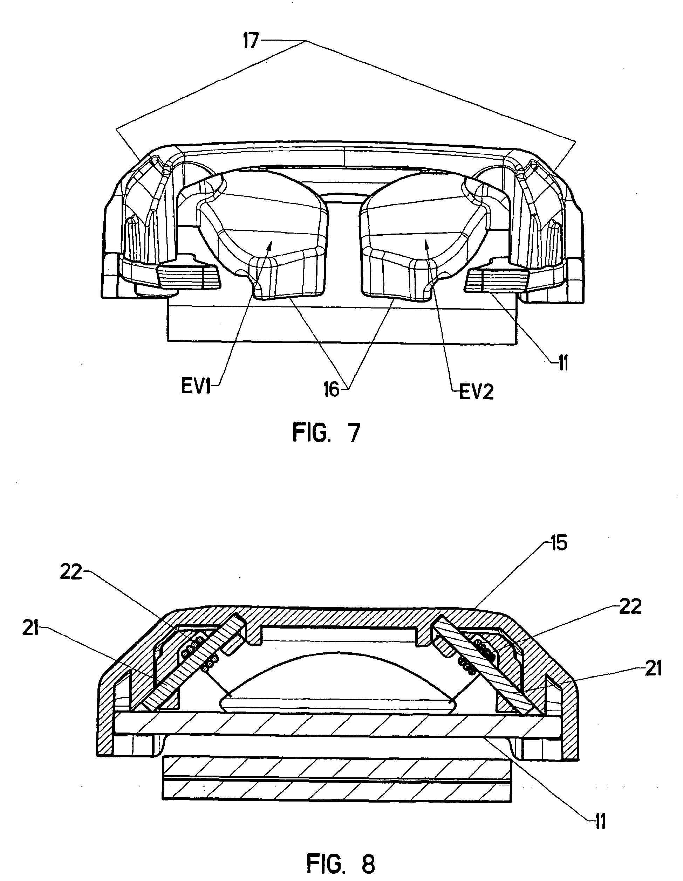

- les figures 6 et 7 sont des vues en coupe selon les lignes 6-6 et 7-7 de la figure 5 ;
- la figure 8 est une vue en coupe selon la ligne 8-8 de la figure 5, et montrant les articulations des deux leviers.

### Description détaillée de l'invention

Sur les figures, une boucle de fixation 10 comporte une embase 11 métallique munie d'un crochet 12 à la partie antérieure. Le crochet 12 est destiné à recevoir un anneau de retenue 13 auquel est reliée une sangle d'attache 14, par exemple d'une ceinture ou d'un harnais. La partie postérieure de l'embase 11 est conformée en étrier pourvu de moyens de réglage de la longueur de la sangle d'attache 14.

L'embase 11 est fixée à un capot 15 qui coiffe partiellement la face supérieure de l'embase 11, sauf la zone d'introduction Z1 de l'anneau de retenue 13 dans le crochet 12.

Le capot 15 est équipé de moyens de commande susceptibles d'occuper une position de blocage et une position de déblocage, respectivement pour retenir et libérer l'anneau de retenue 13 dans la zone d'introduction Z1. Ces moyens de commande comportent deux éléments de verrouillage EV1, EV2 indépendants l'un de l'autre, et positionnés symétriquement de part et d'autre du plan médian longitudinal de la boucle 10.

Dans l'exemple décrit, les deux éléments de verrouillage EV1, EV2 sont formés par deux leviers 20 montés à pivotement autour d'axes 21 inclinés. Chaque levier 20 possède une butée d'arrêt 16 à l'une des extrémités, et un bouton 17 de manoeuvre à l'autre extrémité. Les deux butées d'arrêt 16 se trouvent en regard du crochet 12, et se déplacent dans la zone d'introduction Z1 si les deux boutons 17 sont actionnés. Les deux boutons 17 sont accessibles en étant logés dans deux lumières 18 prévues latéralement dans le capot 15. Il suffit d'appuyer sur les deux boutons 17 vers la position abaissée de déblocage pour escamoter les deux butées d'arrêt 16.

Un ressort de rappel 22 est enfilé sur chaque axe 21 pivotant des deux éléments de verrouillage EV1, EV2 pour les solliciter vers la position relevée de blocage.

Au-dessus de la butée d'arrêt 16 de chaque élément de verrouillage EV1, EV2, est agencée une rampe 19 sur laquelle prend appui l'anneau de retenue 13 lors de son introduction dans le crochet 12.

Le fonctionnement de la boucle de fixation 10 selon l'invention est le suivant :

Pour accrocher l'anneau de retenue 13 au crochet 12 de la boucle 10, il suffit d'appuyer l'anneau sur les rampes 19 des deux éléments de verrouillage EV1, EV2 en exerçant une certaine pression. Il en résulte un déblocage manuel entrainant les butées d'arrêt 16 vers la position abaissée de déblocage. L'anneau de retenue 13 peut pénétrer dans la zone d'introduction Z1 en s'accrochant au crochet 12, et les butées d'arrêt 16 reviennent automatiquement vers la position relevée de blocage. L'anneau de retenue 13 reste emprisonné dans le crochet 12, et toute ouverture intempestive de la boucle de fixation 10 est impossible en absence d'action sur les boutons 17 latéraux.

On obtient ainsi un double verrouillage de l'anneau de retenue 13 dans la boucle de fixation 10. Un actionnement volontaire ou involontaire d'un seul bouton 17 n'est pas suffisant pour sortir l'anneau 13 du crochet 12.

Lorsque la boucle 10 de fixation est sous charge par la tension de la sangle, tout décrochage de l'anneau de retenue 13 est également inhibé, même en actionnant les deux boutons 17 dans le sens du déblocage.

La commande d'ouverture de la boucle 10 de fixation ne peut s'effectuer que si :
- les deux boutons 17 latéraux sont actionnés simultanément vers la position abaissée de déblocage,
- la boucle 10 n'est pas sous charge, ce qui autorise une poussée de l'anneau vers l'arrière qui se traduit par mouvement d'échappement de l'anneau 13 hors du crochet 12. Dans l'état de charge, ce mouvement manuel de poussée est rendu impossible à cause de la force antagoniste élevée exercée par la tension de la sangle sur l'anneau 13.

Pour la commande de déblocage, il suffit de rapprocher les deux boutons 17 latéraux l'un vers l'autre au moyen du pouce et de l'index d'une seule main. Le pivotement des leviers 20 s'effectue en biais, entraînant une composante verticale vers le bas, c'est-à-dire dans le sens du déblocage.

Il est clair que les leviers 20 pivotants des deux éléments de verrouillage EV1, EV2, peuvent être remplacés par des moyens équivalents, notamment des pattes déplaçables par translation, ou des boutons poussoirs disposés côte à côte.

## Revendications

1. Boucle de fixation (10), comprenant une embase (11) munie d'un crochet (12) pour l'accrochage d'un anneau de retenue (13), et des moyens de commande aptes à occuper une position de blocage, et une position de déblocage, respectivement pour retenir et libérer l'anneau de retenue (13) dans le crochet (12), les moyens de commande comportant deux éléments de verrouillage (EV1, EV2) indépendants l'un de l'autre, et ayant chacun une butée d'arrêt (16) et un bouton (17) de manoeuvre,
**caractérisée en ce que** les éléments de verrouillage (EV1, EV2) sont formés par deux leviers (20) montés à pivotement à l'intérieur du capot (15), la butée d'arrêt (16) étant agencée à l'une des extrémités de chaque levier (20), et le bouton (17) de manoeuvre à l'autre extrémité, le décrochage de l'anneau (13) étant autorisé en l'absence de charge, et lors de l'actionnement simultané des boutons (17) des deux leviers (20) vers la position de déblocage.

2. Boucle de fixation selon la revendication 1, **caractérisée en ce que** les leviers (20) des éléments de verrouillage (EV1, EV2) sont logés à l'intérieur d'un capot (15) fixé à l'embase (11), et comprenant deux lumières (18) latérales pour l'accès aux boutons (17) de manoeuvre.

3. Boucle de fixation selon la revendication 1, **caractérisée en ce que** le levier (20) de chaque élément de verrouillage (EV1, EV2) est monté à pivotement autour d'un axe (21) incliné permettant un pivotement en biais, les deux leviers (20) étant disposés symétriquement par rapport au plan médian longitudinal.

4. Boucle de fixation selon la revendication 3, **caractérisée en ce qu'**un ressort (22) de rappel est associé à chaque levier (20) pivotant pour le solliciter vers la position relevée de blocage.

5. Boucle de fixation selon la revendication 1, **caractérisée en ce que** le levier (20) de chaque élément de verrouillage (EV1, EV2) est doté d'une rampe (19) sur laquelle prend appui l'anneau de retenue (13) lors de son introduction dans le crochet (12).

## Patentansprüche

1. Befestigungsschnalle (10), die eine Basis (11) umfasst, die zum Einhängen eines Rückhalterings (13) mit einem Haken (12) versehen ist, und Steuerungsmittel, die geeignet sind, eine Blockierungs- und eine Freigabeposition einzunehmen, um den Rückhaltering (13) jeweils in dem Haken (12) zurückzuhalten bzw. ihn daraus freizugeben, wobei die Steuerungsmittel zwei voneinander unabhängige Verriegelungselemente (EV1, EV2) umfassen, die ferner jeweils einen Endanschlag (16) und einen Bedienungsknopf (17) aufweisen, **dadurch gekennzeichnet, dass** die Verriegelungselemente (EV1, EV2) von zwei Hebel (20) gebildet werden, die schwenkbar innerhalb der Abdeckung (15) montiert sind, wobei der Endanschlag (16) an einem der Enden jedes Hebels (20) und der Bedienungsknopf (17) am anderen Ende vorgesehen sind und wobei das Aushaken des Rings (13) bei fehlender Last und bei gleichzeitiger Betätigung der Knöpfe (17) der beiden Hebel (20) in Richtung auf die Freigabeposition möglich ist.

2. Befestigungsschnalle nach Anspruch 1, **dadurch gekennzeichnet, dass** die Hebel (20) der Verriegelungselemente (EV1, EV2) innerhalb einer Abdeckung (15) angeordnet sind, die an der Basis (11) befestigt sind und zwei seitliche Öffnungen (18) für den Zugang zu den Betätigungsknöpfen (17) aufweisen.

3. Befestigungsschnalle nach Anspruch 1, **dadurch gekennzeichnet, dass** der Hebel (20) jedes Verriegelungselements (EV1, EV2) schwenkbar um eine geneigte Achse (21) montiert ist, die ein Schwenken in Schrägrichtung erlaubt, wobei die beiden Hebel (20) bezüglich der Mittellängsebene symmetrisch angeordnet sind.

4. Befestigungsschnalle nach Anspruch 3, **dadurch gekennzeichnet, dass** eine Rückholfeder (22) mit jedem schwenkbaren Hebel (20) verbunden ist, um ihn in die angehobene Blocklerungsposition zurückzuführen.

5. Befestigungsschnalle nach Anspruch 1, **dadurch gekennzeichnet, dass** der Hebel (20) jedes Verriegelungselements (EV1, EV2) mit einer Schräge (19) versehen ist, an die der Rückhaltering (13) bei seinem Einführen in den Haken (12) anliegt.

## Claims

1. A fixing buckle (10) comprising a base (11) provided with a latching hook (12) for attaching a retaining ring (13), and control means able to occupy a the retaining ring (13) on and from the latching hook (12), the control means comprising two locking elements (EV1, EV2) independent from one another and both having a stop (16) and a control button (17),
**characterized in that** the locking elements (EV1, EV2) are formed by two levers (20) pivotally mounted inside the cover (15), the stop (16) being arranged at one of the ends of each lever (20) and the control button (17) being arranged at the other end thereof, detachment of the ring (13) being enabled on no load and when the buttons (17) of the two levers (20) are actuated simultaneously to the releasing position.

2. The fixing buckle according to claim 1, **characterized in that** the levers (20) of the locking elements (EV1, EV2) are housed inside a cover (15) fixed to the base (11) and comprising two lateral apertures (18) for access to the control buttons (17).

3. The fixing suckle according to claim 1, **characterized in that** the lever (20) of each locking element (EV1, EV2) is pivotally mounted around an inclined axis (21) enabling offset pivoting, the two levers (20) being arranged symmetrically with respect to the longitudinal mid-plane.

4. The fixing buckle according to claim 3, **characterized in that** a bias spring (22) is associated with each pivoting lever (20) to bias the latter to the raised locking position.

5. The fixing buckle according to claim 1, **characterized in that** the lever (20) of each locking element (EV1, EV2) is provided with a ramp (19) on which the retaining ring (13) presses when the latter is inserted in the latching hook (12)
